# EUROPEAN PATENT APPLICATION

(11) **EP 2 947 026 A1**
(43) Date of publication of application: **25.11.2015**
(21) Application number: 14169000.8
(22) Date of filing: 20.05.2014
(51) Int. Cl.: B65D 51/28

(54) **Retention and release system, beverage container therewith, closure therewith and method for enhancing visual aspects of a beverage**

(71) Applicant: Anheuser-Busch InBev S.A., 1000 Brussels (BE)
(72) Inventor: Debyser, Winok, 3000 Leuven (BE)
(74) Representative: BiiP cvba

(57) **Abstract**

The present invention concerns consumer-interactive fluorescent beverages. In particular, the present invention provides a user-operable retention-release system for releasing at least one fluorescent medium into a beverage for obtaining an attractive visual effect. The present invention further concerns uses of such systems and of such fluorescent media for enhancing visual aspects of preferably transparent beverages, most preferably beer or cider.

## Description

### Technical Field

The present invention relates to user interactive fluorescent beverages. In particular, the present invention provides a user-operable retention-release system for releasing novel fluorescent media into a beverage for obtaining an attractive visual effect. The present invention further concerns uses of such systems and of such fluorescent media for enhancing visual aspects of beverages.

### Background for the invention

In today's dynamic and demanding consumerist culture even the most basic traditional activities like beverage consumption require continuous product-modification and fine-tuning in order to adapt to quickly-evolving customers' needs. In the currently prevailing mindset, the ability to pleasantly surprise or impress a watcher, the so called "wow factor", is gaining greater importance in every-day life, from commercials to simple product design. Advances in manufacturing techniques and their ever-decreasing costs have provided consumers with a wide range of choices of competing products that in order to stay on the market have to address consumers' need thoughtfully and often in unexpected ways. In line with this, there is currently an ongoing trend of endowing commercialised goods with a unique touch like an impactful or provoking design element or a functional feature that will make them stand out among competitor products and thus also increase their chances of being purchased. The "wow factor" plays a tremendous role in social activities and especially during after-work leisure time human interactions that often take place in pubs, bars, or clubs such as discos or nightclubs. A typical socio-culturally seated activity on such events is a collective consumption of beverages, alcoholic and non-alcoholic alike, for example beers, cocktails, sodas etc. Consequently, many beverage product providers compete with novel ideas of enhancing attractive sensory properties - mainly visual or olfactory - of drinks, an example of which includes an already well-known addition of fluorescent colorants that glow in ultraviolet (UV) radiation that frequently used in drinking establishments.

To address the constantly evolving consumerist needs, the present invention provides a range of original and user-interactive fluorescence-based systems for introducing the "wow-effect" to beverage consumption.

In the first instance, the present invention aims to introduce a fresh new visual aspect to beverages to visually stun the consumer and at the same time to enhance the play-factor and the extent of interaction for the consumer with their beverage.

To do so, the present invention provides user-operable retention and release systems for introducing into commercial beverages new fluorescent products comprising fluorescent dyes in dynamic new media such as colloidal media or effervescent carriers. The colloidal fluorescent media allow to create for example opaque cloudy shades that pleasingly stand out against the transparent beverage body, or wobbly structures reminiscent of the ones in lava lamps, or further interesting new jellified shapes such as shiny mini-spheres or long spiral "spaghetti" strings. On the other hand, the effervescent carriers such as tablets or granules can whizz or bubble florescent glow throughout the beverage, adding further sensation of dynamic change. In possible embodiments both types of media can be combined or released sequentially.

The present invention preferably envisages that said retention and release systems are incorporated in beverage containers, such as UV-transparent bottles or cups, or closures therefor, and can be triggered at user's will by e.g. pressing a specially provided for this purpose button or upon opening said containers. In particularly desired aspects, said systems may add even further dynamism to the beverage visual enhancement process by executing different ways of releasing the fluorescent medium or media into the beverage, for example via high speed jetting of the medium or by sequential release of different media in order to, for example, initiate sequential change in the colour of the fluorescence. At the same time, release of said fluorescent medium upon opening of a sealed container serves as a tamper proofing mechanism, visually indicating that the container contents have not been spoiled or accessed in an incidental or unauthorised manner.

Furthermore, by provision of such generally applicable to a large variety of beverage containers retention and release systems and fluorescent inserts for said systems, the present invention further addresses an additional problem of stress put on product retailers in terms of shelf life of fluorescent products and shelf space for many different kinds of drinks. Namely, same retention and releases systems can be used with virtually every beverage type, even though they are preferably intended for alcoholic malt-based drinks like beer. When extending storage life is concerned, the systems or inserts for said systems may be stored separately in cooling conditions, coupled to any beverage container ordered by a consumer at a given moment and perform the release the florescent media in any other moment in which the consumer desires to unleash the "wow-effect" in their beverage.

In all these aspects, the present invention addresses the need for introducing a new sensation into drinking culture, and provide new dynamic means by which consumers can interact or simply play with their drinks.

Fluorescent drinks are known in the art and are considered attractive for their outstanding visual properties in black-lit conditions. A typical example of a well-recognised fluorescent drink is a regular tonic water containing an alkaloid quinine that glows in UV and that was originally used as a prophylactic against malaria. Quinine or riboflavin (vitamin B2) are disclosed e.g. in WO2012160402 as agents added to non-effervescent alcoholic beverages, high-alcohol spirits in particular, in order to make their display more attractive in bars or clubs. Addition of other fluorescent dyes to various beverages, such as fluorescein or commercial xanthene dyes (cf. US2007292588), or florescent proteins such as GFP (cf. WO9729319), only for giving them the appealing fluorescent glow in UV are also known in the art. The fluorescent dyes of these commercial products are usually provided as soluble powder or concentrated aqueous solutions to be pre-mixed with beverages and then served to consumers in a uniformly distributed form in a ready-to drink fluorescence beverage. Where dye stability is concerned, a dye solution or powder may be mixed into a beverage just before serving, as shown in WO2012160402 or US2007292588. As such, the commercial form of the *what-you-see-is-what-you-get* premixed fluorescent beverages suffers from an obvious drawback of being well-known and static, and thus also not so exciting any more for the present-day consumers. The present invention aims to address this stagnating tendency in the embodiments as described below.

### Summary of the invention

The present invention is defined in the appended independent claims. Preferred embodiments are defined in the dependent claims.

In particular, the present invention concerns a retention and release system, preferably user-operable, for use with a beverage container, the system comprising:
- a retention means for retaining a fluorescent dye to be released;
- a release means comprising an activation mechanism for releasing said fluorescent dye from said retention means; characterised in that said retention means further retains a releasable colloidal medium and/or means for generating effervescence, said colloidal medium and/or means for generating effervescence further herein referred to as the "fluorescent media".

In another embodiment, the present invention concerns a beverage container comprising a retention and release system according to the present invention. In a more specific embodiment of the previous embodiment, the present invention provides a beverage container, wherein the activation mechanism of said retention and release system is triggered at opening of said container, which results in releasing of said fluorescent medium into the beverage container. The previous-described embodiment serves as a tamperproof mechanism for indicating that said beverage container has not been opened prior to opening that provides for releasing said fluorescent medium.

In an advantageous embodiment, the present invention concerns a container wherein the retention and release system according to embodiments of the present invention is comprised in a removable closure, such as a cap or a screwcap, for closing said container and preferably sealingly engageable with the entrance to said container.

In further embodiments, the present invention concerns uses of the retention and release systems according to the invention, or containers comprising the latter, for enhancing visual aspects of a beverage. In further embodiments, the present invention concerns uses of the novel florescent media as described herein for enhancing visual aspects of a beverage, as well as closures for beverage containers or inserts for said closures comprising said novel fluorescent media for enhancing visual aspects of a beverage.

Lastly, the present invention also concerns any method of enhancing visual aspects of a beverage, said method comprising the steps of:
(a) releasing into said beverage a fluorescent dye comprised in a fluorescent medium according to the present invention, i.e. a fluorescent dye comprised in a colloidal medium and/or a fluorescent dye comprised in a means of generating effervescence;
(b) exposing said beverage comprising said fluorescent dye released in (a) to UV light.

In an advantageous embodiment of the previous embodiment, the step (a) is preferably performed using a retention and release system according to the present invention, most preferably wherein the end-user or consumer triggers the activation mechanism of said retention and release system at will and thus initiates the release of said fluorescent dye.

### Brief description of the Figures and Tables

For a fuller understanding of the nature of the present invention, reference is made to the following detailed description taken in conjunction with the accompanying drawings in which:

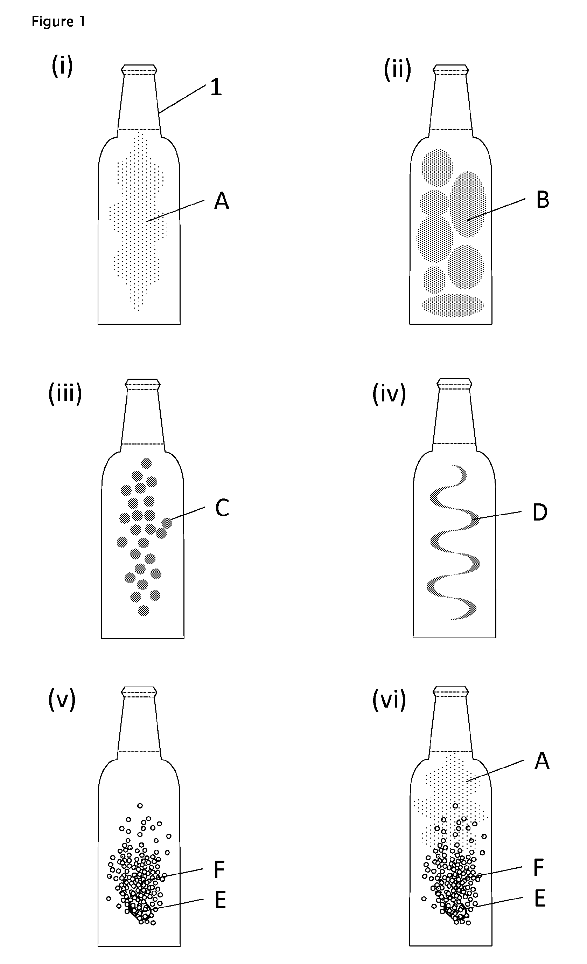

**Figure 1** schematically shows side view of bottles comprising different types and shapes of the fluorescent media according to present invention. (i) opaque cloud [A]; (ii) lava lamp effect [B]; (iii) gel spheres [C]; (iv) gel "spaghetti" noodle [D]; (v) effervescent carrier [E] generating florescent bubbles [F]; (vi) combination of an effervescent carrier [E] generating florescent bubbles [F] and an opaque cloud [A].

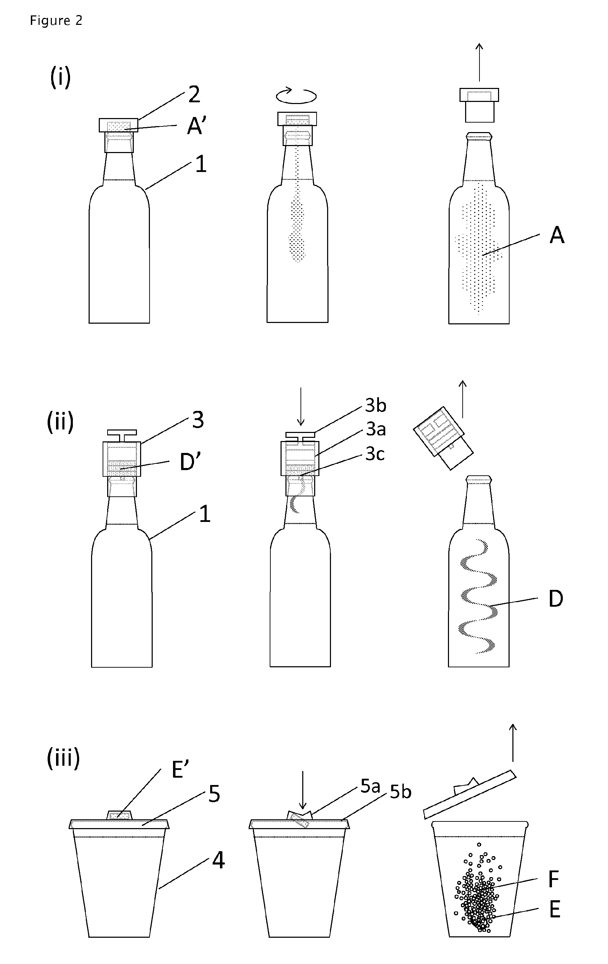

**Figure 2****:** schematically shows exemplary methods of user-operable retention and release systems according to the invention. (i) shows a dispensing bottle cap [2] that upon opening of said cap jets a fluorescent medium comprising a cloudifier [A] into the bottle [1]; (ii) shows a bottle with a cap [3] comprising a syringe-like example of a retention and release of the invention, wherein pressing the plunder [3b] of said syringe forces out into the beverage a string of a fluorescent jelly [D']; (iii) a plastic beer cup [4] covered with a plastic lid [5] retaining a fluorescent effervescence-generating tablet [E'] in the lid's pocket. The tablet [E'] can be released from this pocket by the user in a similar way as pharmaceutical pills are removed from blister strips, i.e. by deformation-caused tearing of an aluminium foil shielding underneath said tablet that then falls by gravity into the beverage.

### Definitions

As used herein the term **"retention and release system"** is to be understood as any assembly of elements suitable of retaining a substance within said system, and capable of releasing it outside said system, preferably in response to an external cue causing certain change within said system (further referred to as "**activation mechanism**") and thus initiating the release procedure. The retention and release systems as concerned herein comprises at least two functional elements; namely at least one "retention means" and at least one "release means". As used herein, the former refers to any structure or an element providing a physical space wherein a substance of interest can be stored. A non-limiting example of "retention means" can be a chamber defined by at least one side wall (spherical or semi-spherical), or any other compartment capable of confining the retained substance in whichever phase or form or a carrier comprising said substance in a defined position within the retention and release system. On the other hand, as used herein, the term "**release means**" describes any arrangement of elements that upon a trigger conferred by the activation mechanism, undergoes changes that provide access between the retention means and the outside of the retention and release system, and alternatively may further actively guide the release or expulsion of the contents of said retention means outside of the retention and release system. A non-limitting example of a release means can be an arrangement of elements comprising a valve, a piercing element, and a scaffold for moving said piercing element in response to change of pressure relayed by opening of said valve. In such instance, the release means could be considered a pressure-induced piercing element that can, e.g. create an opening in a chamber retaining a substance and thus cause oozing of said substance outside of said chamber and outside of the entire exemplary retention and release system. As used herein, the term "**fluorescent dye**" refers to any substance that will glow when exposed to ultraviolet light (black light), being the electromagnetic radiation that occurs between the visible spectrum and x-rays (i.e. radiation in the range of 10 nm to 400 nm with energies from 3eV to 124 eV). As the present application is primarily concerned by the UV spectrum employed in drinking establishments and entertainment venues, as used herein the term "UV light" or "black light" is to be understood as referring to the longwave UVA region, that is, UV radiation nearest in wavelength to visible light, with low frequency and therefore relatively low energy. With this in mind, as used herein the term "fluorescence" should be understood as the glow produced under UV lighting of the type commonly used in bars and nightclubs, usually also under low levels of ambient visible (white) light conditions, frequent in said establishments. Thus the term "fluorescence" or "fluorescent glow" is to be interpreted as a glow visible unaided to the human eye under low levels of ambient visible light (below about 5 lux).

As used herein, the term "**colloidal medium**" is to be understood as any dispersion of a homogeneous non-crystalline substance consisting of one-phase particles of a mean diameter comprised between approx. 1 nm to 1 um of one substance dispersed through a second substance. Colloids for example include gels, sols, and emulsions, which form stable systems whose particles do not settle.

A type of an emulsion, usually a oil-in-water emulsion, is a "cloudifying againt" also known as a "**cloudfier**" or an "opacifier" that is in principle any agent added into a liquid to render it opaque or turbid.

### Detailed description of the invention

The present invention concerns a retention and release system for use with a beverage container, the system comprising a retention means for retaining a fluorescent dye to be released and a release means responsive to an activation mechanism for releasing said fluorescent dye from said retention means; said system characterised in that said retention means further retains a releasable colloidal medium and/or means for generating effervescence.

In one embodiment, the present invention concerns such retention and release system that comprises a retention means for retaining a fluorescent dye and a release means responsive to an activation mechanism for releasing said fluorescent dye from said from said retention means, characterised in that said retention means retains a releasable colloidal medium and/or means for generating effervescence., and further characterised in that said activation mechanism is consumer-operable.

By consumer-operable it should be understood as suitable for being triggered and sufficiently easy for being used by a customer. For example, a consumer will readily be able to trigger or activate the activation mechanism by e.g. pressing on a designated area, pushing a button, opening a cap or turning a screwcap, removing an indicated element, or squeezing the beverage container. In such instances the activation mechanism will most likely be a pressure change, movement of a piercing element, or tearing of an element such as a thin film shielding the access to the retention means, etc. and thus directly or indirectly affecting the retention means retaining the fluorescent dye, which causes said dye's release.

There are currently known in the art many different retention and release systems that could serve the purpose of the present invention. Exemplary advantageous solutions are provided by dispensing caps manufactured by companies like Gizmo, World Wide Widget, or Drop Top. For example, EP2013105 of Gizmo Packaging Ltd. discloses a dispense cap for jetting an additive into a bottle under high speed. In this case, the additive is stored in a chamber under high pressure for driving the high speed jetting of the additive upon activation of the dispense cap by actuation of a valve. In this particular instance, the retention means are to be understood as the chamber, the activation mechanism is the pressure change actuating the valve, and said valve together with the system of moving elements that drive opening of the route leading from said pressurised additive chamber into the interior of the beverage container serve as the release means. Other solutions provided by Gizmo that are equally applicable for the present invention are taught in WO2012175934 or DE112007001961. Another example involving pressure-driven jetting mechanism is described in WO2007081210 wherein the retention means (a chamber) is positioned inside of a bottle. An alternative example of a retention and release system comprised in a closure for a beverage container but involving no need for pressure changes is disclosed in WO2013088422, wherein releasing of an additive into a bottle is done by an activation mechanism comprising cutting open a bottom wall of the closure during opening of the bottle by the user and thus occurs by gravity. Alternative solutions may involve a movement of a piercing element that creates a hole in the retention means and as a consequence provides a tunnel between said means and the interior of a container; such solution is described for example in WO9729319.

Further solutions, equally suitable for implementation in the present invention are taught for example in EP0360374, and particularly suitable for beverage cans in EP0597606 or EP0597608.

Of course, it should be remarked that because the present invention aims to evoke a visual "wow" in a consumer, the suitable beverage containers are preferably transparent to UV radiation. Such containers can be manufactured from traditional translucent materials such as glass or translucent plastics based on polystyrene, vinyl, polypropylene or alike. Also, beverage containers suitable for the application in the present invention may be manufactured by any standard container-manufacturing techniques well-known in the art, including blow moulding or by welding (heat welding, sonic welding etc.) gluing, or otherwise affixing together potentially multiple parts. The choice of a suitable UV-transparent material that is appropriate for a given fluorescent dye, as well as container manufacturing technique will be readily recognised or at least easily assessable for a skilled person and therefore will not be elaborated on herein further.

Concerning the fluorescent dye, any at least one non-toxic suitable for consumption fluorescent dye of any colour can be used according to the present invention.

For example, dye of any colour are preferably be appropriate for any colourless transparent beverage, whereas for liquids having colour of their own, such as beers or ciders, some dyes may perform better or provide more interesting contrast than others, which can be easily determined and optimized by a skilled artisan. Similarly, it will be readily apparent to any skilled person that the amount to be used of a given fluorescent dye itself will vary depending on the dye type, beverage type (colour, density, alcohol content etc.), volume of the beverage or of the fluorescent medium (esp. should the latter be not intended to mix with said beverage), strength of UV light in a given establishment, and on the desired apparent luminosity to be achieved in the final product. For example, for about 100 ml to about 400 ml of (beverage) liquid, in many instances about 0.01 ug to about 4 ug of a powdered fluorescent dye provides a relatively strong apparent luminosity.

The fluorescent dyes should soluble in water but can also be provided in other food-grade carriers such as ethanol or acetone. Examples of preferred dyes include quinine, riboflavin, fluorescein, xanthene, rhodamine, eosin, caffeine, curcumin, and/or erythrosine.
Quinine emits light of wavelength 400nm when exposed to UV light of wavelength 340nm. Riboflavin emits light of wavelength 450nm when exposed to UV light of wavelength 350nm. Fluorescein emits light of wavelength 520nm when exposed to UV of wavelength 494nm. Caffeine emits light of wavelength 440nm when exposed to UV light of wavelength 370nm. Curcumin emits light of wavelength 530nm when exposed to UV light of wavelength 470nm. Erythrosine emits light of wavelength 570nm when exposed to UV of wavelength 540nm. The present invention assumes the possibility of using more than a single fluorescent dye type, either in a mixture, or provided separately or sequentially so as to form gradient of different glowing colours.

Because of their acceptance in food industry and relatively strong fluorescence, in a preferred embodiment, the present invention provides a retention and release system according to any preceding embodiment wherein the fluorescent dye is selected from a group comprising quinine, fluorescein, riboflavin, curcumin, caffeine, erythrosine, purified fluorescent proteins such as GFP, BFP, or phycobiliproteins (such as red phycoerythrins or blue phycocyanins) and/or admixtures comprising one or more of the above dyes.

In particular embodiments, fluorescent dyes may further be provided with additional flavouring, perfuming, or colouring agents, or buffering compositions for stabilisation of fluorescence conditions or colorant hue. Said additives are well known in the art and, for example may be selected from groups comprising essential oils, general esters, aldehydes, fatty acids, lactones, or terpene alcohols etc. Vanillin or citrus oils such as lemon, lime and orange (distilled and cold pressed), and natural spice oils such as cinnamon, buchu, peppermint etc. only some specific examples but other suitable flavourings would be well known to the person skilled in the art. Similarly, a skilled person will also be knowledgeable of alimentary colourants, such blue E133, red E129, orange E110 etc, and will able to determine in which carriers these and other agents should be provided into a beverage, examples of which include ethanol, water, or mixes thereof, optionally compounded with propylene glycol or alternative surfactants etc. In very particular embodiments, a retention and release system of the invention can be envisaged, wherein multiple retention means such as chambers or other compartments are present, each comprising a different combination of dyes, clourants, flavouring agents or alike. Such multi-chamber retention and release system could have a separately operable release means associated with different chambers so as to allow the end user more interaction possibilities and greater ability to play with their beverages. In a particular embodiment, an arrangement of multiple retention means could be sequentially responsive to one activation mechanism (such as opening of a beverage container) so as to generate a cascade or a dynamic gradient of different fluorescent glows, colours, flavours, or even textures. Another feature that can advantageously be exploited is that some colorants such as cochineal or anthocyanins display different colours in different pH. Thus, a retention and release system according to the present invention could comprise a mechanism for releasing at a chosen moment a dye or acid solution for modifying the pH of a beverage and thus inducing a change in its colour or fluorescence profile.

The uniqueness of the presently disclosed retention and release system partially lies in the provision of at least florescent dye in an interactive and dynamic medium that adds to a beverage a play and interaction factor even some time after being released.

As stated before, the retention or release system according to the present invention comprises a retention means that in addition to the afore-mentioned at least one fluorescent dye also retains a releasable colloidal medium and/or means for generating effervescence such as an effervescent carrier. In alternative embodiments said fluorescent dye can be already comprised in a mixture with said colloidal medium or within said means for generating effervescence in one compartment of said retention means, or, for stability concerns in some instances, said fluorescent dye may be retained in a separate compartment such as sub-chamber of said retention means with respect with the compartment or a different sub-chamber wherein said colloidal medium or means of generating effervescence are retained as long as both the fluorescent dye and the colloidal medium or means for generating effervescence are concomitantly released as one fluorescent medium or one fluorescent means for generating effervescence, respectively, into the interior of the beverage container or into the beverage comprised in said interior.

In a preferred embodiment, the retention and release system according to any preceding embodiment is provided, wherein said colloidal medium and/or said means for generating effervescence are concomitantly released with said fluorescent dye upon triggering the activation mechanism.

In another embodiment, the retention and release system is provided, wherein said fluorescent dye is comprised within said colloidal medium, or within said means for generating effervescence. In such instance the fluorescent dye will reside in the same compartment of the retention means as said colloidal medium or said means for generating effervescence.

The colloidal media are advantageously selected from a group comprising:
- a colloid wherein the dispersed phase is liquid and the continuous phase is liquid, wherein both liquids are immiscible, said colloid being an emulsion with regard to mean particle size of the dispersed phase;
- a colloid wherein the dispersed phase is liquid and the continuous phase is solid, said colloid being a sol with regard to mean particle size of the dispersed phase;
- a colloid wherein the dispersed phase is solid and the continuous phase is liquid, said colloid being a gel with regard to mean particle size of the dispersed phase gel.

Thus, in other words, in one preferred embodiment, the present invention provides a retention and release system wherein said colloidal medium is an emulsion, sol, or gel.

Each of these three preferred colloidal media provide different advantages with respect to interaction extent and type a user can experience with their beverage comprising any of said media provided with a fluorescent dye.

For example, a fluorescent emulsion, especially when provided at appropriate liquid density, can arrange itself in ghostly shades or a cloud resembling shining smoke, which will form a visually attractive contrast against a transparent beverage, preferably in this instance being beer or cider.

A particular type of such opaque emulsions are called clouding agents or couldifiers, also known as opacifiers. Cloudifiers are frequently used in fruit juices with low or no natural juice content to boost or add the naturally-appearing turbidity in order for them to resemble the naturally cloudy juice of the fruit species flavour they are named after. Cloudifiers usually contain an oil phase and a water phase and thus are oil-in-water emulsions. The suspended oil droplets in the beverage have an optical effect that renders the beverage liquid translucent (opaque) to the eye of the viewer.

Thus, in a preferred embodiment of the present invention, a retention and release system is provided, wherein the emulsion is a cloudifier.

The achieved translucency may vary in degree depending on the cloudifier content and its strength. Common cloudifier oils e.g. include palm oil, glycerol ester of wood rosin (ester gum), sucrose acetoisobutyrate (SAIB), or extracts of citrus fruits, which will be known to a skilled person. The used clouding emulsion should not impart the taste or odour of the beverage, beer in particular, and therefore should be a neutral cloud.

In a visually attractive embodiment of the retention and release system according to the invention, a fluorescent dye is provided in a mixture with a cloudifier and is jetted at high speed in response to an activation mechanism into the interior of the beverage container. Such arrangement will provide a cloudy shade with an attractive profile of fluorescent glow (schematically illustrated in Fig1-i), much more visually pleasing and smooth as compared to jetting of a fluorescent dye without the cloudifying agent. In a particular embodiment of the previous embodiment, said mechanism can be executed by any of the closures responsive to an activation mechanism being opening of said closure, as listed above, and additionally can be used as a visual signal for deterring package or product tampering.

In an alternative embodiment, it may be preferred that the provided retention and release system of the invention retains a colloidal medium that is a sol or a gel, or a combination thereof, so called sol-gel system.

Sols and gels comprise polymeric chains or otherwise stabilised long-chain structures that form a solid phase network in the liquid phase, and transition between each other dependently on the amount of solid phase (more prevalent in gels) versus liquid phase (more prevalent in sols). The jellifying agent is the substance that forms the solid phase network underlying a sol or gel colloid, and in certain preferred embodiments of present invention said sol or gel is formed by a jellifying agent selected from a group comprising agar-agar, alginate, agarose, gelatine, pectin, or any other comestible substance known in the art.

In a particular embodiment of the previous embodiment, the fluorescent dye is comprised in sol medium, wherein said medium forms spherical structures that contrast with the beverage to which they were released. Preferably, said structures are capable of floating in said beverage, which can be achieved by adjusting their density, resembling the ones commonly encountered in lava lamps (schematically illustrated in Fig. 1-ii). In a further embodiment, the fluorescent dye is comprised in gel or jellified medium, that is has a particular shape. Preferable shapes include a spaghetti string or a spiral (Fig. 1-iii) or a sphere or a plurality of spheres (Fig. 1-iv), but can also be aesthetically more elaborated as shapes of floating fluorescent medusas, planes, U-bots, or gummy bears.

Another embodiment of the present invention assumes a possibility of comprising the fluorescent dye in an effervescent carrier, such as a carbon tablet or granulate, or any other means for generating effervescence. Such means commonly include compressed desiccated forms of substances designed to break in contact with water or another liquid, releasing carbon dioxide in the process. Therefore, in one possible embodiment, a retention and release system of the invention comprises a fluorescent dye comprised in an effervescent tablet or granulated that upon contact with a beverage to which it is being released will start producing a stream of fluorescent bubbles (Fig. 1-v). Production of effervescent tablets and substances is known in the art and thus will not be described here further.

In an attractive embodiment resulting from a combination of two above-described embodiments, a retention and release system according to the present invention may jet a fluorescent emulsion comprising both one fluorescent dye and a cloudifier, and concomitantly release an effervescent tablet containing another fluorescent dye of another colour than the first one. Said combination will result in a vigorous but gradual change of fluorescent colour along the dissolution of the effervescent tablet and thus also release of the second dye (Fig. 1-vi).

Of course, it should be understood that other combinations of the afore-described embodiments also form part of the present invention.

In an advantageous embodiment, the present invention further provides a beverage container comprising a retention and release system as identified in any of the previously disclosed embodiments.

Suitable beverage containers as used herein should be understood as any of the containers suitable for accommodating a beverage and allowing access to said beverage for the purpose of drinking it, and at the same time allowing passage of UV-radiation to a satisfactory extent for obtaining the desired fluorescent flow. Common and preferred beverage containers comprise bottles or glasses or cups of different shapes. In a particular embodiment, the container according to other embodiments of the present invention is a bottle, preferably a bottle of capacity between 100 ml to 500 ml, most preferably made of a UV transparent material.

As implied previously, an advantageous embodiment of the previous embodiment provides a beverage container wherein said retention and release system is comprised in a closure removably engageable with said container, preferably at the entrance into said container.

In a more specific embodiment of the above one, the present invention concerns a container having an opening closable by said closure, wherein said closure is preferably releasably and preferably also sealably engageable with said container.

In a further development of the previous embodiment, said container comprises a retention and release system wherein the activation mechanism for said retention and release system is the action of removing said closure from said container.

In particularly preferred embodiments, the container according to any of the above embodiments contains a malt-based beverage, preferably beer.

In an alternative embodiment of the present invention, a consumer-operable release and retention system provided in or on the bottle is provided.

In a further aspect, the present invention also provides a closure or an insert for said closure or for the previously described beverage container, wherein said closure or an insert for said closure or beverage container comprises a retention and release system as identified in any of the previously described embodiments.

In a specific embodiment of the above, the present invention provides a closure for closing a beverage container, said container comprising a retention and release system as identified in any of the above embodiments.

In further aspects, the present invention also provides a method of enhancing visual aspects of a beverage, said method comprising the steps of:
(a) releasing into said beverage a fluorescent dye comprised in a colloidal medium and/or a fluorescent dye comprised in a means of generating effervescence;
(b) exposing said beverage to UV light

In a preferred embodiment of the above method, said releasing step in (a) is performed by a retention and release system according to any of the applicable embodiments as listed above, preferably in an consumer-operable manner.
In further more specific embodiments of the provided herein method, said retention and release system is comprised in a closure of a bottle. Preferably, the release of a fluorescent medium is executed from and/or by said closure, more preferably upon opening said closure, most preferably by means of high-speed jetting.

Lastly, the present invention provides uses for a retention and release system of the invention for enhancing visual aspects of a beverage, preferably malt-based and/or carbonated beverage, preferably beer or cider.

Further, a use is disclosed for a fluorescent dye comprised in a colloidal medium for enhancing visual aspects of said beverage.

Similarly, a use of a fluorescent dye comprised in means for generating effervescence such as an effervescent carrier, preferably in a form of a tablet or a granule, is also disclosed for enhancing visual aspects of said beverage.

### Examples of the invention

### 1. examples of retention and release systems and their activation mechanisms.

Conceptual examples are schematically shown in Figure 2:
Panel (i) shows a dispensing cap [2] for a bottle, which upon opening provides a pressure-driven mechanism for high-speed jetting into the bottle [1] of a fluorescent medium comprising a fluorescent dye and a cloudifier [A] retained in said cap prior to opening [A'].
Panel (ii) illustrates a cap for a bottle, said cap [3] comprising a positive displacement dispensing mechanism, herein exemplified as a barrel [3a] with a plunger [3b], that can exert positive pressure upon pressing said plunder onto a proximal end of a hollow string [3c] retaining a gel "spaghetti" noodle [D']. The positive displacement of said plunger [3b] forces said noodle [D] out of the opposite -distal- end of said hollow string [3c] into the bottle [1].
Panel (iii) shows a plastic beverage cup [4] covered with a plastic lid [5] comprising a pocket [5a] protruding above said lid's outer plane [5b], said pocket retaining an effervescence-generating tablet [E'] comprising a florescent dye. The tablet [E'] is prevented from falling into the beverage cup by a thin sheet of aluminium foil and can be forced into the beverage cup by the user who deforms the pocket by pressing or bending the lid in a similar way tablets or capsules are ejected from the regular medicinal blister strips.

### 2. examples of compositions of fluorescent media comprising a fluorescent dye (concentrations provided as final concentration in liquid)

### (a) Quinine & Cloudifier

- Quinine.HCL (1% solution) concentration range: 5-200 mg/L, preferably 30-150 mg/L, most preferably 50-100 mg/L
- Cloudifier IFF - SC 313002 - (active compound: Ester Gum E445)) concentration range:
- 5-100 mL/L, preferably 30-70 mL/L, most preferably 40-60 mL/L

OBTAINED RESULT: white glowing cloud both in sparkling water or transparent beer

### (b) Riboflavin & Cloudifier

- Illuzoon (Riboflavin) concentration range:
- 0.1-30 mg/L, preferably 0.5-15 mg/L, more preferably 1-10 mg/L, most preferably 3-8 mg/L
- Cloudifier IFF - SC 313002 - (active compound: Ester Gum E445)) concentration range::
- 5-100 mL/L, preferably 30-70 mL/L, most preferably 40-60 mL/L

OBTAINED RESULT: green glowing cloud both in still water, sparkling water or transparent beer

## Claims

1. A retention and release system for use with a beverage container, the system comprising:
- a retention means for retaining a fluorescent dye to be released;
- a release means responsive to an activation mechanism for releasing said fluorescent dye from said retention means;
**characterised in that**
said retention means further retains a releasable colloidal medium and/or means for generating effervescence.

2. A retention and release system according to claim 1, wherein the activation mechanism is consumer-operable..

3. A retention and release system according to any of the preceding claims, wherein said colloidal medium is an emulsion, sol, or gel.

4. A retention and release system according to claim 3, wherein said emulsion is a cloudifier.

5. A retention and release system according to any of the preceding claims, wherein said fluorescent dye is comprised within said colloidal medium.

6. A retention and release system according to any of the preceding claims, wherein said colloidal medium and/or said means for generating effervescence are concomitantly released with said fluorescent dye upon triggering said activation mechanism.

7. A retention and release system according to any of the preceding claims, wherein said fluorescent dye is selected from a group comprising quinine; fluorescein; riboflavin; curcumin; caffeine; erythrosine; purified fluorescent proteins such as GFP, BFP; or phycobiliproteins, such as red phycoerythrins or blue phycocyanins; and/or admixtures comprising one or more of the above dyes.

8. A beverage container comprising a retention and release system as identified in any of the claims 1-7.

9. A beverage container according to claim 8, wherein said retention and release system is comprised in a closure removably engageable with said container.

10. A beverage container according to claim 18, wherein the activation mechanism for said retention and release system is the action of removing said closure from said container.

11. A container according to any of the claims 8-10, wherein said container contains a malt-based beverage, preferably beer.

12. A container according to any of the claims 8-11, wherein said container is a bottle, preferably made of a UV transparent material.

13. A closure for closing a beverage container comprising a retention and release system as identified in any of claims 1-7.

14. A method of enhancing visual aspects of a beverage, said method comprising the steps of:
(a) releasing into said beverage a fluorescent dye comprised in a colloidal medium and/or a fluorescent dye comprised in a means of generating effervescence;
(b) exposing said beverage to UV light.

15. A method according to claim 14 wherein said releasing in (a) is performed by a retention and release system according to any of the claims 1-7.
